Europäisches Patentamt

(19) **European Patent Office**

**Office européen des brevets**

(11) Veröffentlichungsnummer: **0 171 525**
**A2**

(12) # EUROPÄISCHE PATENTANMELDUNG

(21) Anmeldenummer: **85106570.6**

(22) Anmeldetag: **29.05.85**

(51) Int. Cl.⁴: **H 04 Q 7/04**

---

(30) Priorität: **27.06.84 DE 3423640**

(43) Veröffentlichungstag der Anmeldung:
**19.02.86 Patentblatt 86/8**

(84) Benannte Vertragsstaaten:
**AT BE CH DE FR GB IT LI LU NL SE**

(71) Anmelder: **Standard Elektrik Lorenz Aktiengesellschaft**
**Lorenzstrasse 10**
**D-7000 Stuttgart 40(DE)**

(72) Erfinder: **Langewellpott, Ulrich, Dr.**
**Sulzgrieser Steige 23/5**
**D-7300 Esslingen(DE)**

(74) Vertreter: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

---

(54) **Mobilfunksystem.**

(57) Funksystem zur Nachrichtenübertragung zwischen einer Feststation und mehreren Mobilstationen im Zeitmultiplexverfahren, bei dem durch Ausgleich der Signallaufzeiten sehr kleine Schutzzeiten zwischen den einzelnen Nachrichtenkanälen möglich sind.

Der Ausgleich erfolgt durch von der Feststation veralßtes Verschieben des Sendezeitrahmens SZ der Mobilstation bezüglich dem Zeitrahmen der Feststation.

EP 0 171 525 A2

./...

a)

Steuerzeitschlitz | Nachrichtenzeitschlitz Nr.1 | EZ

FS

| /// | S | Na. Kanal | S' | SZ

b)

MS

EZ

SZ

c)

FS

EZ

$\overline{\tau}$ Zeitkorrekturwert
—c— Sicherheitsintervall

d)

MS

EZ

SZ

e)

FS

EZ

U. Langewellpott 6
30 · S · 84

Fig.2

U.Langewellpott-6

Funksystem

Die Erfindung bezieht sich auf ein Funksystem gemäß dem Oberbegriff des Anspruchs 1. Ein derartiges System ist aus der DE-OS 31 18 018 bekannt.

Bei diesem System verhindern Schutzzeiten zwischen den einzelnen Zeitmultiplexkanälen, daß sich beispielsweise das Ende eines von einer ersten Mobilstation MS gesendeten Signals und der Anfang eines von einer zweiten Mobilstation MS gesendeten Signals im Empfänger einer mit beiden Mobilstationen "gleichzeitig" verkehrenden Feststation FS überlappen. Die Länge der Schutzzeiten richtet sich nach der größten zu erwartenden Signallaufzeit zwischen der Feststation FS und den Mobilstationen MS.

Der Erfindung liegt die Aufgabe zugrunde, ein Funksystem zu schaffen, bei dem eine eventuelle Überlappung zweier Nachrichtenkanäle verhindert wird.

Die Lösung der Aufgabe erfolgt mit den im Anspruch angegebenen Mitteln.

Bei dem neuen Funksystem ist es möglich, die Schutzzeiten zwischen den Nachrichtenkanälen, verglichen mit den bekannten Lösungen, zu verkleinern. Eine Verkürzung der erforderlichen Schutzzeiten ermöglicht eine Vergrößerung der Anzahl der Kanäle innerhalb eines Zeitrahmens oder eine Reduktion der Bandbreite. Zusätzlich ermöglicht die Erfindung die Entfernung der Feststation zu den Mobilstationen zu ermitteln.

Die Erfindung wird nachstehend anhand eines Ausführungsbeispiels erläutert. Es zeigt

Fig.1 ein Schema eines Zeitrahmens beim Zeitmultiplexverfahren

Fig.2 die zeitliche Lage des Sende- und Empfangszeitrahmens einer
Mobilstation MS relativ zum Zeitrahmen einer Feststation FS.

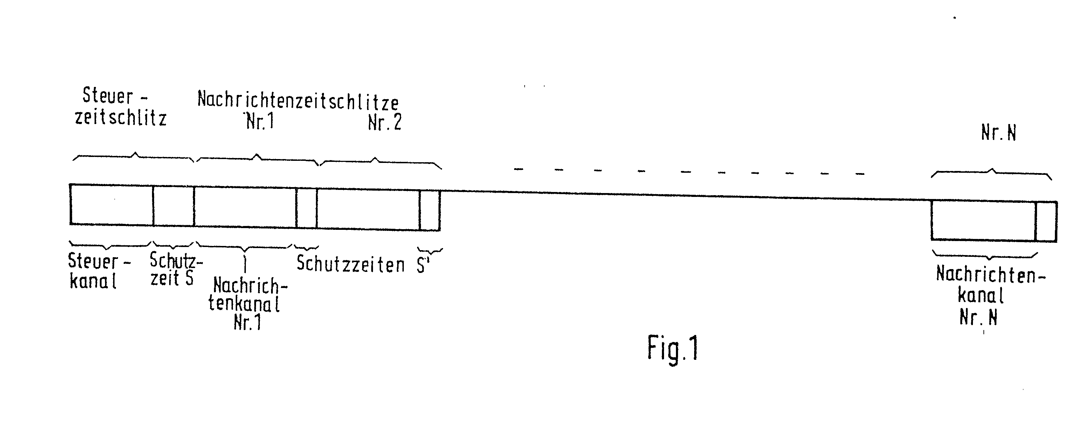

Der Zeitrahmen nach Fig. 1 enthält mehrere Kanäle, die
durch Schutzzeiten voneinander getrennt sind. Der erste
Kanal ist ein Steuerkanal, dem eine erste Schutzzeit S
folgt. Darauf folgen N Nachrichtenkanäle, die jeweils
durch eine im Vergleich zur Schutzzeit S kleine Schutzzeit S' getrennt sind.

Die Länge der Schutzzeit S ist nach der größten zu erwartenden Signallaufzeit zwischen Mobil- und Feststation bemessen. Durch die Schutzzeiten S' werden durch Mehrwegeempfang mögliche Laufzeitunterschiede oder Schwankungen
der Taktgeneratoren aufgefangen.

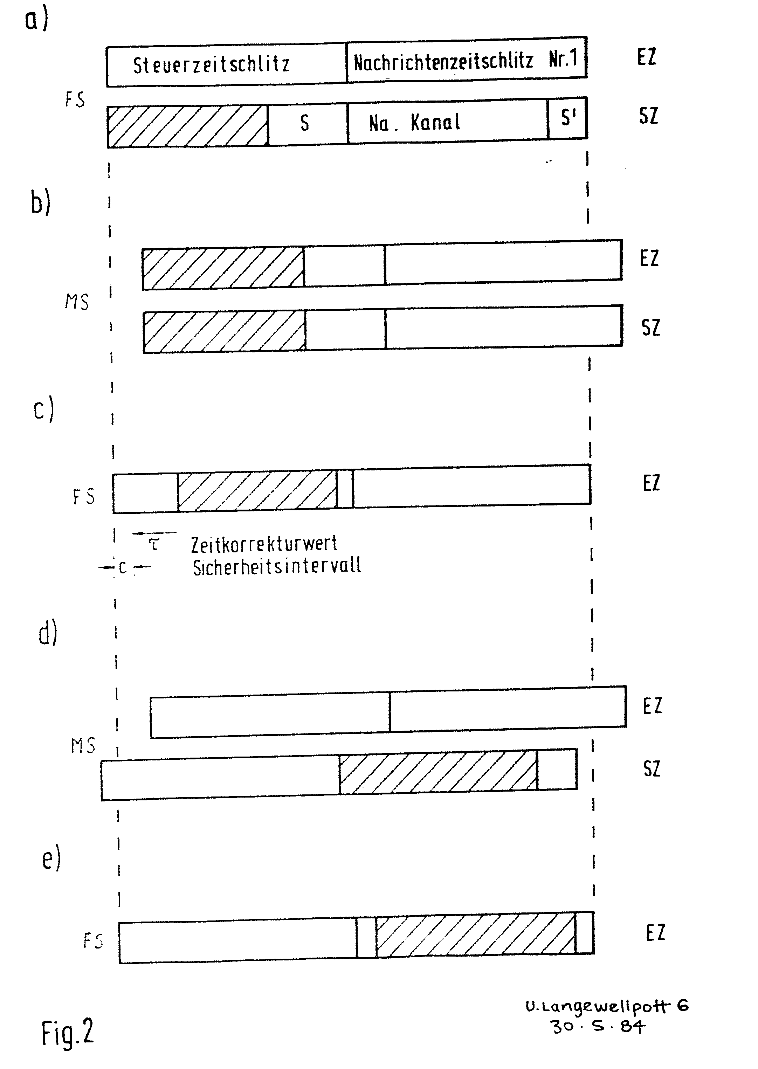

In Fig. 2 sind schematisch die ersten beiden Zeitschlitze
der Zeitrahmen der Fest- und Mobilstation in ihrer zeitlichen Lage zu einer gedachten, horizontalen Zeitachse
dargestellt. Jeder Zeitschlitz enthält eine Kanalzeit und
eine darauf folgende Schutzzeit S oder S'. Die Fig. 2a,c und e
beziehen sich auf den Zeitrahmen der Feststation FS und die
Fig. 2b und d auf den der Mobilstation MS. Bei der Feststation FS gibt es keine Unterscheidung zwischen Sendezeitrahmen
SZ und Empfangszeitrahmen EZ (Fig. 2a). Sende- und
Empfangszeitrahmen der Mobilstation MS sind während
der Nachrichtenübertragung um bestimmte, unterschiedliche
Zeitspannen (Fig. 2d), sonst um die gleiche Zeitspanne
(Fig. 2b) gegen den Zeitrahmen der Feststation FS verschoben.

U.Langewellpott-6

Bei der Aufnahme einer Verbindung zwischen Fest- und Mobilstation wird zunächst der Steuerkanal benutzt. Dabei synchronisiert sich der Taktgenerator der Mobilstation MS auf die über Funk übertragenen Steuersignale der Feststation FS. Da der Taktgenerator den Zeitrahmen festlegt, ist hierdurch der Empfangs- und Sendezeitrahmen der Mobilstation MS um die Signallaufzeit gegenüber dem Zeitrahmen der Feststation FS verzögert. Fig. 2b zeigt den Sende- und Empfangszeitrahmen der Mobilstation MS nach der Synchronisation.

Daher empfängt die Feststation zunächst die von der Mobilstation gesendeten Signale mit einem Zeitversatz zu ihrem Zeitrahmen, der der doppelten Laufzeit entspricht (Fig. 2c). Da die zum Aufbau einer Nachrichtenverbindung notwendigen Steuersignale über den Steuerkanal übertragen werden, fällt dieser Zeitversatz in die Schutzzeit S, die ja entsprechend groß gewählt ist. Die Feststation mißt den Zeitversatz und teilt der Mobilstation einen Zeitkorrekturwert $\tau$ mit, der dem Zeitversatz abzüglich einem Sicherheitsintervall c entspricht. Das Sicherheitsintervall c ist beispielsweise halb so groß wie die Schutzzeit S'.Ist der Übergang auf einen Nachrichtenkanal vorgesehen, so verlegt die Mobilstation ihren Sendezeitrahmen um diesen Korrekturwert vor (Fig. 2d), so daß die von der Mobilstation gesendeten Signale zum richtigen Zeitpunkt bei der Feststation eintreffen (Fig. 2e). Die Übertragung von Nachrichten auf einem der Nachrichtenkanäle kann beginnen.

Durch Standortveränderungen der Mobilstation MS oder durch Drift ihres Taktgenerators während der Nachrichtenübertragung kann sich der Sendezeitrahmen SZ der Mobilstation MS bezüglich des Zeitrahmens der Feststation FS verschieben.

U.Langewellpott-6

Die Feststation FS überprüft fortlaufend durch Zeitversatzmessungen im Nachrichtenkanal, ob und in welcher Größe derartige Verschiebungen auftreten und veranlaßt gegebenenfalls durch ein Signal, das dem Zeitkorrekturwert $T$ entspricht, daß die Mobilstation MS ihren Sendezeitrahmen SZ um die angeforderte Zeitspanne verschiebt.

Dieses Signal ist beispielsweise in einer Präambel enthalten, die, wie aus der DE-OS 31 18018 bekannt, der zu übertragenden Nachricht vorangestellt ist.

Die Entfernung zwischen der Feststation FS und jeder Mobilstation MS wird aus dem bei Beginn der Nachrichtenübertragung von der Feststation ermittelten Zeitversatz und unter Berücksichtigung der während der Nachrichtenübertragung vorgenommenen Korrekturen berechnet.

STANDARD ELEKTRIK LORENZ
AKTIENGESELLSCHAFT
STUTTGART


U.Langewellpott-6


Patentanspruch


Funksystem mit mindestens einer Feststation und mehreren
Mobilstationen, bei dem Nachrichten- und Steuersignale
im Zeitmultiplexverfahren übertragen werden, wobei innerhalb eines Zeitrahmens mehrere Nachrichtenkanäle und ein
oder mehrere Steuerkanäle vorhanden und die Kanäle durch
Schutzzeiten voneinander getrennt sind,

dadurch gekennzeichnet, daß in der
Feststation (FS) Mittel vorhanden sind,die den zeitlichen
Versatz zwischen dem Zeitrahmen der Feststationen (FS)
und den Sendezeitrahmen (SZ) der Mobilstationen (MS)
messen und einen dem jeweiligen zeitlichen Versatz entsprechenden Korrekturwert zur jeweiligen Mobilstation
(MS) übertragen, und daß jede Mobilstation (MS) Mittel
enthält, ihren Sendezeitrahmen (SZ) um den jeweiligen
Korrekturwert zu verschieben.


ZT/P1-Jt/Ni
24.05.1984

Steuerzeitschlitz

Nachrichtenzeitschlitze
Nr.1    Nr.2

Nr.N

Steuerkanal

Schutzzeit S

Schutzzeiten S'

Nachrichtenkanal
Nr.1

Nachrichtenkanal
Nr. N

Fig.1

0171525

U.Langewellpott G
30.5.84

a)

b)

c)

$\tau$ Zeitkorrekturwert
c Sicherheitsintervall

d)

e)

U.Langewellpott 6
30·5·84

Fig.2